# EUROPEAN PATENT APPLICATION

(11) **EP 0 825 100 A2**
(43) Date of publication of application: **25.02.1998**
(21) Application number: 97306300.1
(22) Date of filing: 19.08.1997
(51) Int. Cl.: B62K 27/12, B62K 13/06

(54) **Coupling two bicycles together**

(30) Priority: 19.08.1996 GB 9617390; 19.02.1997 GB 9703437
(71) Applicant: Record, Robert, 78510 Triel Sur Seine (FR)
(72) Inventor: Record, Robert, 78510 Triel Sur Seine (FR)
(74) Representative: Harrison Goddard Foote

(57) **Abstract**

A coupling means and method which allows one bicycle 1 to be coupled to another bicycle 2 such that towing of one bicycle by the other is possible. The coupling means A allows the rear wheel of the towing bicycle to be placed alongside the front wheel of the towed bicycle, which is held in such a position as to prevent it contacting the ground. The coupling means provides a convenient, stable and compact means of towing one bicycle with another bicycle.

## Description

This invention relates to bicycles. In particular, the present invention is concerned with the coupling together of two bicycles to permit one to be towed by the other.

Various means of coupling bicycles together to permit one to be towed by another have been disclosed. For example, DE-A-3913075, DE-A-4228252, DE-A-4244206 and FR-A-2507145 all teach the use of a form of rigid tow bar between the two bicycles, the first three documents specifically requiring that the front wheel of the bicycle being towed should be held in a raised position above, and not in contact with, the ground. In addition, systems which rely on the use of a more flexible towing means, in which articulation is effectively provided by the tow bar arrangement, are described in DE-A-3739515 and DE-A-19531503. These documents respectively illustrate the use of towing means with which the front wheel of the towed bicycle may be either in contact with, or raised above, the ground.

Such arrangements, however, are prone to instability and, clearly, can be particularly cumbersome in operation. More compact systems are disclosed in WO-95/09761, CA-A-2109983 and FR-A-2710604, in which bicycles are coupled together by removing the front wheel of the bicycle to be towed and providing means of attaching a member of said bicycle to the rear axle of the towing bicycle. However, removal of the front wheel of the bicycle to be towed is clearly an unwanted inconvenience, and it would be preferable if the stable and compact arrangement disclosed in these documents could be achieved without the necessity for such action.

Accordingly, it is an object of the present invention to provide a means of coupling bicycles to one another such that the coupled bicycles provide a compact, stable arrangement, without the disadvantages associated with the systems of the prior art which utilise various tow bar arrangements.

It is a further object of the present invention to provide such a compact, stable arrangement without the requirement for the removal of the front wheel from the bicycle to be towed.

According to a first aspect of the present invention there is provided a device for coupling together two bicycles, whereby one bicycle may be towed by the other, said device including a connecting assembly having first means for attachment to the rear of the towing bicycle and second means for attaching to the front of the towed bicycle, said first and second attachment means being arranged such that when the device is in use the front wheel of the towed bicycle is raised from the ground and is positioned at least partly to one side of the rear wheel of the towing bicycle. Advantageously, said second attachment means is attached to the front of the towed bicycle at a position such that the normal articulation between the front and rear of the towed bicycle is substantially unhindered.

Preferably, said connecting assembly is such that, in use, the front wheel and forks assembly of the towed bicycle is located adjacent that part of the towing bicycle where the rear wheel is attached to the rear frame.

According to a preferred embodiment of this first aspect of the invention, there is provided a connecting assembly comprising one or more brackets attached to the rear frame of the towing bicycle, each bracket being joined by a link to one or more connecting arms attached to the front wheel and forks assembly of the towed bicycle.

Said connecting arm or arms may be attached to the front wheel of said front wheel and forks assembly such that angular movement between the two bicycles in their vertical longitudinal plane is permitted by means of the rotational freedom about the mounting of the front wheel relative to the rest of the towed bicycle. Alternatively, said connecting arm or arms may be attached to a non-moving part of said front wheel and forks assembly (eg a front fork), rotational freedom being provided by the link, for example by means of a bearing, so arranged as to allow said connecting arm or arms to pivot relative to the bracket, thereby permitting angular movement whilst substantially constraining movement in other planes.

Preferably means are provided whereby the extent of said angular movement may be restricted. Thus, it is possible to avoid the case of extreme articulation of the rear frame of the towing bicycle and front wheel of the towed bicycle when, for example, riding around a sharp bend, wherein collapse of the towed bicycle may occur.

Optionally, it is possible to limit the extent of angular movement between the two bicycles in the vertical longitudinal plan by including auxiliary means for connecting the two bicycles. Such means may be located between a position above the rear wheel of the towing bicycle and a position above the front wheel of the towed bicycle and may comprise a link for extension between the two bicycles, maintaining lateral separation therebetween and permitting limited angular movement therebetween. Said auxiliary means may, in use, extend between a carrier rack mounted on the towing bicycle and the handlebars of the towed bicycle.

The present invention also provides for means to allow release of said connecting assembly, thus facilitating separation of the towed bicycle from the towing bicycle. Release of said connecting assembly is most conveniently provided at the point of attachment to the towed bicycle with complete connecting assembly remaining attached to the towing bicycle.

According to a second aspect of the present invention there is provided a method of coupling together two bicycles whereby one bicycle may be towed by the other, said method comprising providing a connecting assembly having first means for attachment to the rear of the towing bicycle and second means for attachment to the front of the towed bicycle, attaching said first attachment means to the rear of the towing bicycle and attaching the second attachment means to the front of the towed bicycle, the connecting assembly being such that, when attached to the two bicycles, the front wheel of the towed bicycle is raised from the ground and is positioned at least partly to one side of the rear wheel of the towing bicycle.

The present invention will now be described, by way of example only, and with reference to the accompanying illustrative drawings, of which:
Figure 1 is a side view of the two cycles coupled to one another in accordance with the present invention;
Figure 2a is a side schematic view of a first embodiment of the invention and Figure 2b is a sectional view of a wheel attachment clamp;
Figure 3 is an exploded side schematic view of a second embodiment of the invention;
Figure 4 is an end view of the embodiment depicted in Figure 3;
Figure 5 is an overall view of means provided to limit angular movement between the two bicycles;
Figure 6a is a side schematic view of a third embodiment of the invention; and Figures 6b and 6c are sectional views of the means of attachment; and
Figure 7a is an exploded schematic side view of a fourth embodiment of the invention and Figures 7b and 7c are sectional views of the means of attachment.

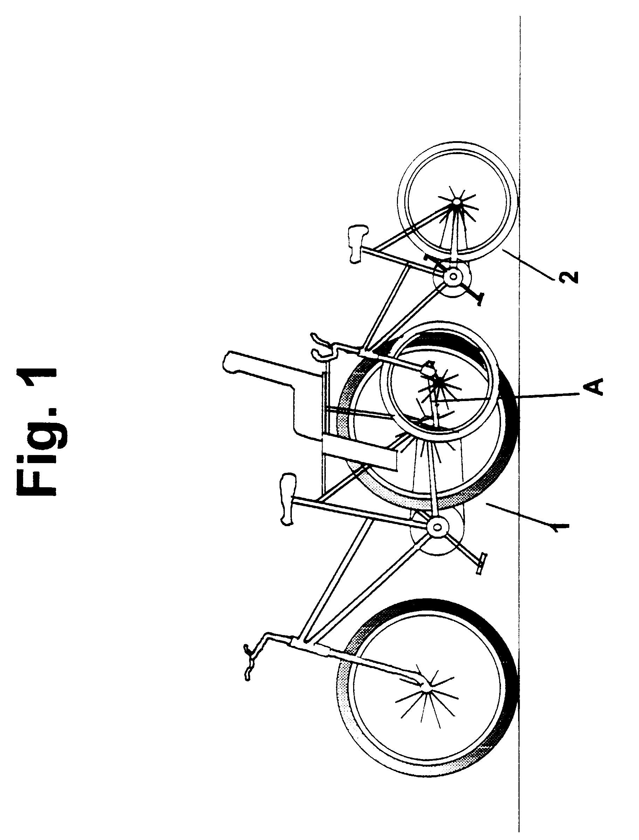

Referring firstly to Figure 1, the two cycles 1, 2 are interconnected by a device "A" attached to a rearward portion of the frame of leading bicycle 1. The front wheel and forks assembly of towed bicycle 2 has been positioned alongside the rear wheel of the leading bicycle and fixed to rear frame of bicycle 1 by means of the device "A" with the front wheel raised from the ground.

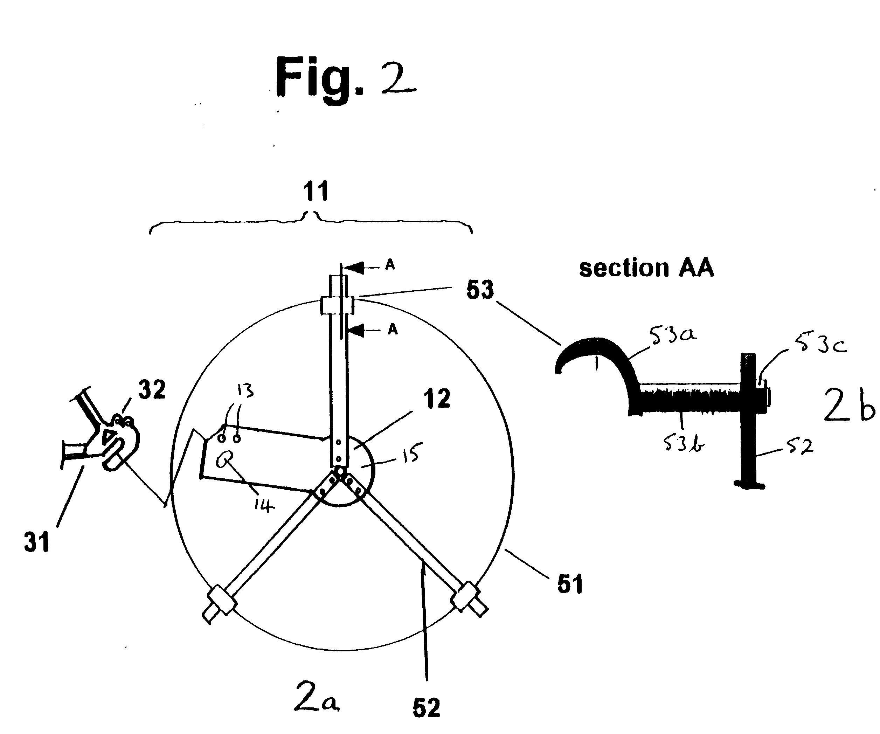

A first embodiment of a device in according to the present invention is shown in Figure 2a and 2b. The device includes a bracket 12 having attachment holes 13 at locations corresponding to apertures 32 on the frame 31 of the leading cycle.

The bracket 12 is attached to the frame 31 by bolts (not shown) extending through the attachment holes 13. Bracket 12 is also provided with a slot 14 through which the axle (not shown) of the rear wheel of the towing bicycle may extend. Optionally, the bracket 12 can rest on this axle (or the wheel fastening nuts screwed thereto) or be fixed to it by wheel fastening nuts so as to be supported additionally by that rear wheel axle.

Bracket 12 is further provided with three connecting arms 52 which extend from the centre of a circular end portion 15 of bracket 12. There are three connecting arms 52, each of which extends radially outwardly from the centre of portion 15 to a position beyond the outer periphery of wheel 51 of the towed bicycle. Each connecting arm 52 is provided, near its free end, with a wheel attachment clamp 53. Each wheel attachment clamp 53 includes a curved tyre gripping element 53a and connected thereto a bolt 53b which is secured to connecting arm 52 by means of nut 53c. Figure 2a illustrates the three connecting arms secured to the bicycle wheel 51. The two bicycles may be separated by a slackening off the connecting bolts 53b.

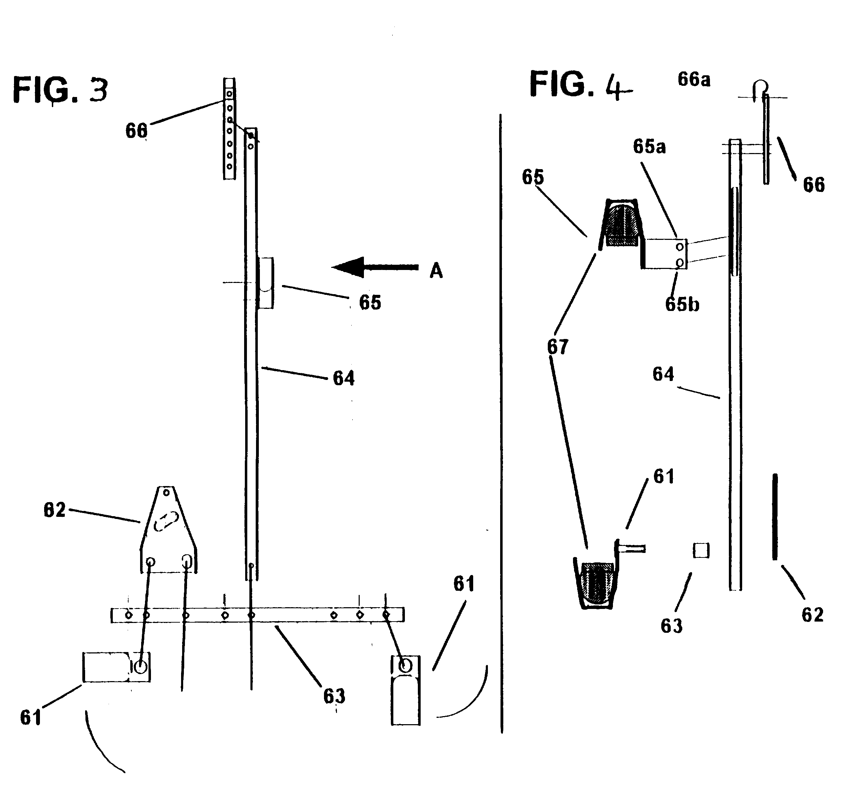

Figure 3 and Figure 4 (view A of Figure 3) illustrate a variant of the embodiment shown in Figure 2, wherein bracket 63 is fixed to frame 31 by means of a mounting plate 62 and suitable screws and nuts (not shown). The lower wheel attachment clamps 61 are each attached to said bracket by means of a flat headed bolt and in a hole position and at an angle of attachment to the bracket appropriate to the size of the front wheel of the bicycle to be towed.

Connecting arm 64 is secured by screws and nuts (not shown) to bracket 63 and adjustably via a link piece 66 and clip 66a to a child seat carrier mounted on bicycle 1, or by a suitably rigid connecting strut to the rear frame of said bicycle.

Upper wheel attachment clamp 65 is secured by screw and nut 65a and by locating stud 65b to connecting arm 64. The screw and nut are of such type as to be slackened or tightened by hand (eg quick release bolt). Connection of the front wheel of towed bicycle 2 is performed by placing the lower part of the wheel in the lower wheel attachment clamps 61 and by releasing screw and nut 65a and sliding the upper wheel attachment clamp downwards in the slot of the connecting arm to engage tyre and rim 67 of upper part of said front wheel. The upper wheel attachment clamp is secured in position by tightening screw and nut 65a.

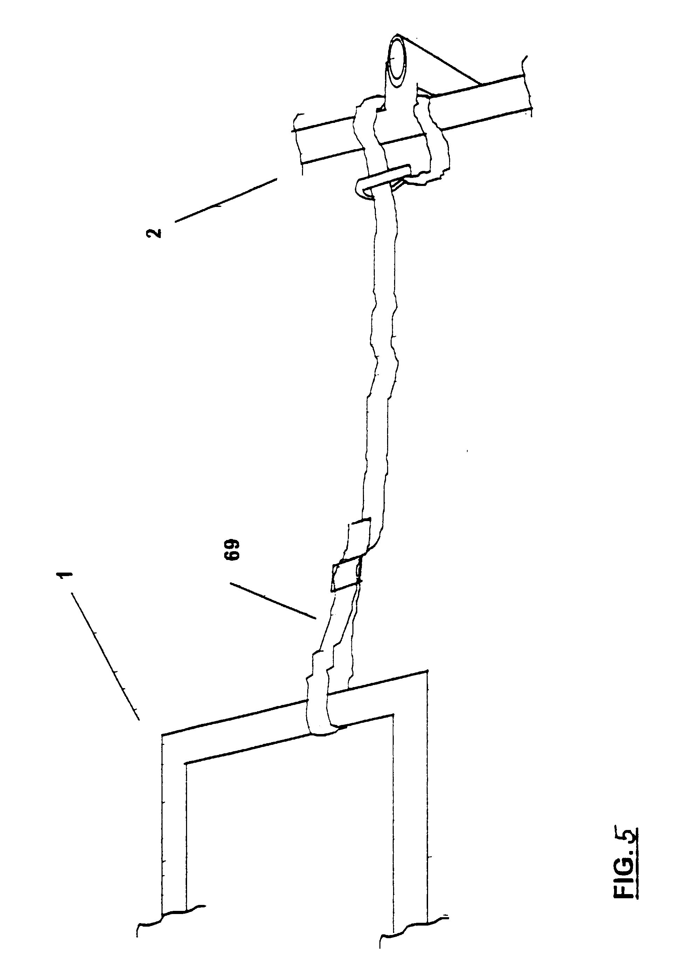

Angular movement of the towed bicycle is limited rearwards by a strap of adjustable length 69, as shown in Figure 5, which is attached to a suitable part of lead bicycle 1 such as to the child seat carrier and removably to the upper portion of the front forks assembly (eg handlebars) of towed bicycle 2. The strap is preferably secured in position by a quick release hook.

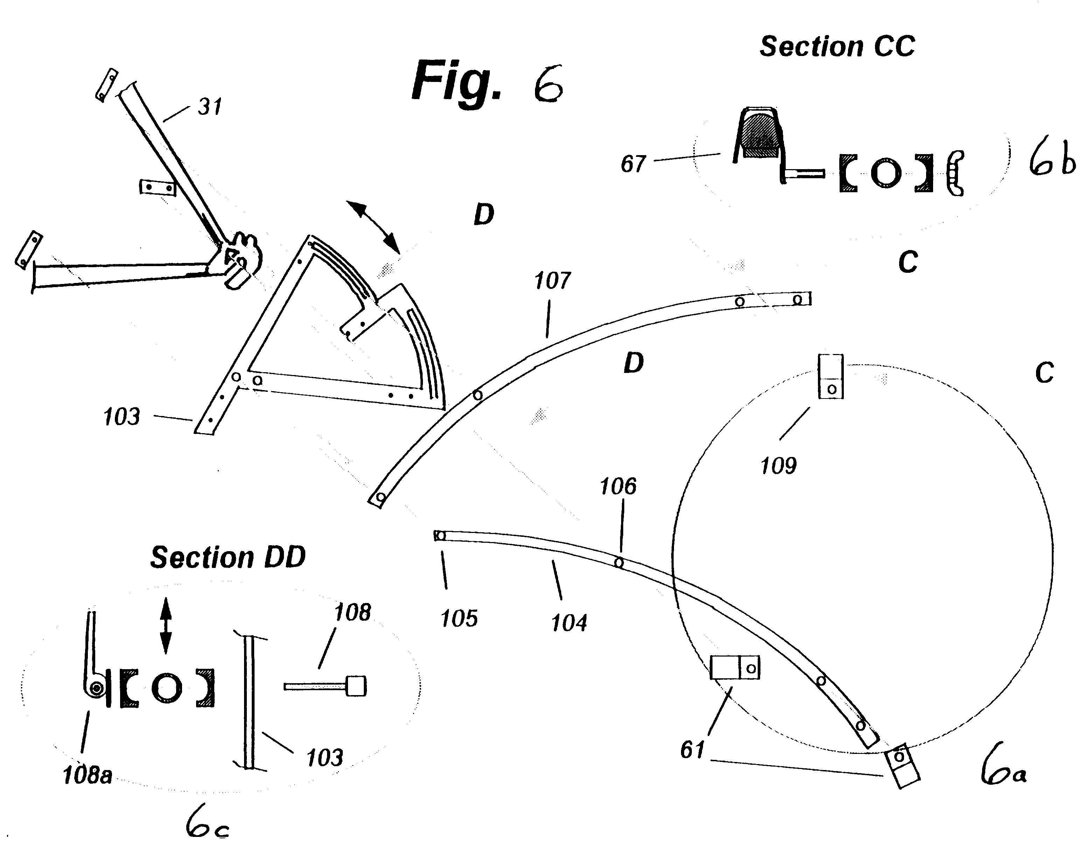

Figures 6a, 6b and 6c illustrate a variant of the embodiment of Figure 2 wherein bracket 103 is fixed to frame 31 by means of mounting clamps and suitable screws and nuts (not shown).

The lower wheel connecting arm 104 is attached to said bracket by means of pivot pin 105 (bolt and nut), and by means of clamping screw 106.

The lower wheel attachment clamps 61 are attached to the lower wheel connecting arm by means of a flat headed bolt and in a hole position and at an angle of attachment to the connecting arm appropriate to the size of the front wheel of the bicycle to be towed.

The upper wheel connecting arm 107 is attached to bracket 103 by means of a pivot pin (as 105) and by means of clamping screw 108 (see section DD). Said clamping screw is of such type as to be slackened or tightened by hand (eg quick release bolt). Connection of front wheel of the towed bicycle 2 is performed by placing the lower part of the wheel in lower wheel attachment clamps 61 and by releasing screw and nut 108 and sliding connecting arm 107 downwards (following slot in bracket 103) to enable upper wheel attachment clamp 109 to engage tyre and rim 67 of the upper part of said front wheel.

The upper wheel attachment clamp is secured in position by tightening screw and nut 108 and 108a.

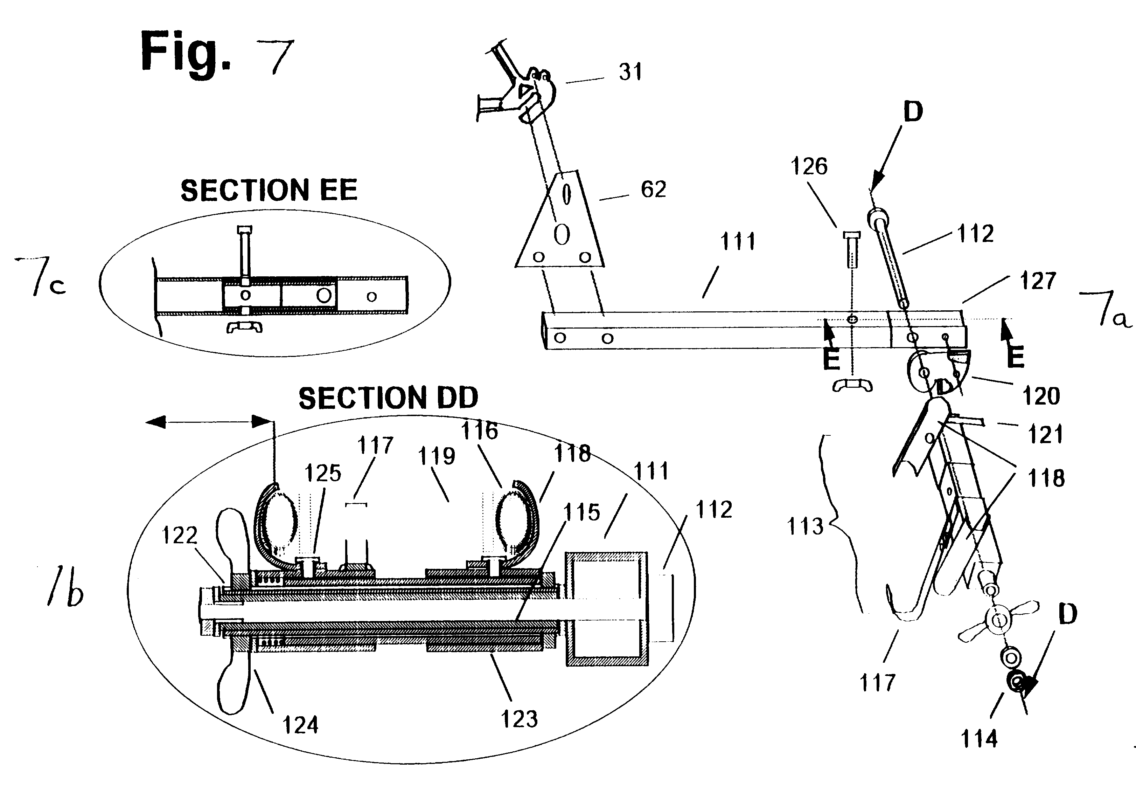

Figures 7a, 7b and 7c illustrate a further embodiment wherein bracket 111 is fixed to frame 31 by means of screws and nuts (not shown) via a mounting plate 62 fitted with suitably positioned holes.

Said bracket 111 is fitted with a bolt-like stub shaft 112 that extends laterally away from the centre plane of the lead bicycle 1 and retains connecting arm 113 for coupling together the two bicycles by means of nut 114 and washer in such manner that the connecting arm 113 is free to pivot about shaft 112 and sleeve 115.

The device consists of clamp arms 118 fitted to square tube sections 123, said square tube sections being retained by threaded tube 122 and securing nuts. The external nut 124 is of such type as to be slackened or tightened by hand (eg wing nut). Said clamp is fitted pivotably to the square tube section by screw 125.

In the interconnected position of the two cycles the connecting arm 113 extends between the spokes of the front wheel of the towed bicycle and is clamped onto the lower front forks 116 by means of clamp arms 118. Optional hook 117 mounted on a flexible arm passes underneath and supports front wheel hub assembly 119.

Angular pivoting movement of the pivoting arm 113 is limited by cushioned stop bracket 120 and arm 121.

The connecting arm 113 is releasable from the front forks by slackening wing nut 124 and permitting the square tube sections and clamp arms to slide apart.

When out of use the connecting arm may be placed in a stowed position by withdrawing bolt 126 and bracket end assembly 127 and remounting in the 90° position.

## Claims

1. A device for coupling together two bicycles, whereby one bicycle may be towed by the other, said device including a connecting assembly having first means for attachment to the rear of the towing bicycle and second means for attachment to the front part of the towed bicycle, said first and second attachment means being arranged so that when the device is in use the front wheel of the towed bicycle is raised from the ground and is positioned at least partly to one side of the rear wheel of the towing bicycle.

2. A device according to Claim 1 wherein the said attachment means is for attachment to the front of the towed bicycle at a position such that the normal articulation between the front and rear of the towed bicycle is substantially unhindered.

3. A device according to Claim 1 or 2 wherein the connecting assembly is such that, in use, the front wheel and forks assembly of the towed bicycle is located adjacent that part of the towing bicycle where the rear wheel is attached to the rear frame.

4. A device according to any of the preceding claims wherein the connecting assembly includes release means to enable the towed bicycle to be easily separated from the towing bicycle.

5. A device according to Claim 4 wherein said release means enables the bicycles to be separated at the point of attachment to the towed bicycle with the complete connecting assembly remaining attached to the towing bicycle.

6. A device according to any of the preceding claims wherein the connecting assembly comprises one or more brackets attached to the rear frame of the towing bicycle, each bracket being joined by a link to one or more connecting arms attached to the front wheel and forks assembly of the towed bicycle.

7. A device according to any of the preceding claims wherein the connecting assembly includes means whereby anugular movement between the two bicycles is permitted in the vertical longitudinal plane.

8. A device according to any of Claims 1 to 6 wherein the front wheel mounting of the towed bicycle is disposed relative to said second attachment means of the connecting assembly such that angular movement is permitted about said mounting.

9. A device according to Claim 7 or Claim 8 wherein auxiliary means is provided for limiting the extent of said angular movement.

10. A method of coupling together two bicycles whereby one bicycle may be towed by the other, said method comprising providing a connecting assembly having first means for attachment to the rear of the towing bicycle and second means for attachment to the front of the towed bicycle, attaching said first attachment means to the rear of the towing bicycle and attaching the second attachment means to the front of the towed bicycle, the connecting assembly being such that, when attached to the two bicycles, the front wheel of the towed bicycle is raised from the ground and is positioned at least partly to one side of the rear wheel of the towing bicycle.
